# EUROPÄISCHE PATENTANMELDUNG

(11) **EP 1 099 722 A2**
(43) Veröffentlichungstag der Anmeldung: **16.05.2001**
(21) Anmeldenummer: 00124490.4
(22) Anmeldetag: 09.11.2000
(51) Int. Cl.: C08J 7/04, C09D 5/38, G04B 37/22

(54) **Metallisch erscheinender Kunststoff-Artikel, insbesondere Funkarmbanduhrgehäuse**

(30) Priorität: 12.11.1999 DE 19954553
(71) Anmelder: Junghans Uhren GmbH, 78713 Schramberg (DE)
(72) Erfinder: Stadler, Hansjörg, Dr., 90607 Rückersdorf (DE); Springer, Willi, 77761 Schiltach (DE)
(74) Vertreter: Hofmann, Gerhard, Dipl.-Ing. Patentassessor

(57) **Zusammenfassung**

Durch Applikation von modernen Lacken auf den Kunststoffrohling wird dessen farbdekorierte Oberfläche wesentlich besser geschützt, als bei Anwendung bisher üblicher Farblacke. Das Aushärten erfolgt vorwiegend herkömmlich thermisch, aber auch die zukunftsträchtige Lichtaushärtung vor UV-Lampen ist anwendbar, für die nur noch etwa ein Zehntel der Energie benötigt wird, die für thermisches Aushärten einzusetzen ist.

## Beschreibung

Die früher weit verbreitete Gepflogenheit der galvanischen Metallbeschichtung (Metallisierung) von Kunststoffartikeln wie ibs. Armbanduhrengehäusen kommt heute wegen der Umweltschutzauflagen aus Kostengründen für die Großserienfertigung kaum noch in Betracht. Damit stellt sich allgemein das Problem der Realisierung metallischer oder wenigstens metallisch erscheinender abriebfester Beschichtungen auf ibs. geometrisch komplizierten und im Alltag erheblichen mechanischen Beanspruchungen ausgesetzten Kunststoffkörpern wie ibs. auch Armbanduhrengehäusen.

JUNGHANS-Funkarmbanduhren mit integrierter Antenne zeichnen sich durch kompakten Aufbau ihres Werkes aus, weil die - dort aus Lamellen geschichtete flexible - Ferritstab-Antenne der Gehäuse-Innenkontur folgend in den Rand der Leiterplatte für die elektronischen Empfangs-, Dekodierungs- und Uhrenschaltungen integriert ist. Allerdings bedingt ein derartiger Aufbau ein nicht-metallisches Uhrgehäuse, weil andernfalls durch die Nähe des Metalls die Antennenfunktion nicht nur infolge einer Fehlabstimmung, sondern insbesondere auch infolge nicht über Nachstimmung kompensierbaren Güteverlustes bis zur Funktionsunfahigkeit beeinträchtigt werden könnte.

Ebenso wie das vorbekannte galvanische Metallisieren eines Kunststoffgehäuses ist auch dessen Kaschieren durch eine Dekor-Metallhaube nicht nur hinsichtlich des Fertigungsaufwandes oft zu teuer, sondern auch das führt noch bei Funkarmbanduhren zu einer nicht hinnehmbaren Beeinträchtigung der Empfangseigenschaften bei nahe der Gehäusewandung integrierter Antenne. Deshalb muß man sich hier in der Regel mit Kunststoff-Armbanduhrgehäusen begnügen.

Wenn jedoch etwa aus markttechnischen Gründen ein gestalterisch wertigeres, nämlich metallenes Uhrgehäuse gewünscht ist, wird die magnetische Langwellenantenne zum Empfang der kodierten Zeitinformation deshalb in der Regel nach außerhalb des Uhrgehäuses in das Armband hinein verlegt. Eine solche Lösung weist die grundsätzlichen Nachteile auf, daß sowohl der Armbandanschlag an das Uhrgehäuse (wegen des Erfordernisses einer flexiblen Einführung der Antennenleitung) wie auch das Armband selbst (wegen des zwar flexiblen aber doch nicht vernachlässigbaren Fremdkörpers in Form der geschichteten Ferritantenne im schlauchförmigen Armband) tragebedingt sehr verschleißgefährdet und damit störanfällig sind.

Es bestand deshalb aus verschiedenen Anforderungen der Praxis heraus das Problem, einen auch bei komplexer Geometrie kostengünstig herstellbaren, abriebfesten metallisch erscheinenden Kunststoffkörper wie ibs. ein Armbanduhrengehäuse zu schaffen.

Die Lösung dieses Problems wurde erfindungsgemäß nach dem Hauptanspruch darin gefunden, vorzugsweise aus leichtem aber schlagfestem Kunststoff wie insbesondere kohlefaserverstärktem Kunststoff bestehende Kunststoffrohlinge wie Armbanduhrengehäuse einer optischen und mechanischen Oberflächenveredelung durch Lackieren mit einem Hartlack zu unterziehen.

Dafür wird der mechanisch fertig bearbeitete, etwa aus ABS (Acrylnitrilbutadien-Styrol) oder PC (Polycarbonat) bestehende Rohling mit einer Grundierung aus z.B. einem Lack auf Polyuretan-Basis (PU-Basis) versehen. Auf diese Grundierung wird ein Acryl-Lack als vorzugsweise unstrukturiert metallisch-pigmentiertes einfarbiges Dekor aufgebracht, was einen irisierenden Glanzeffekt erbringt. Um die Beschichtung stoß- und abriebfest zu gestalten, wird diese Dekorschicht dann von einer klaren Organosilikat- oder dergleichen Hartlackschicht überzogen, vorzugsweise unter Zwischenlage einer Haftschicht auf PU-Basis zur Vermeidung späteren Abplatzens der spröden äußeren Hartlackschicht über der Dekorschicht. Da der Ausdehnungskoeffizient des Organosilikates von den üblichen Gehäusematerialien abweicht und die Dekor- und Haftschichten aus mechanischen Gründen keinen vollen Ausgleich schaffen können, ist zur Vermeidung von temperaturschwankungsbedingten Rißbildungen die äußere Hartlackschicht möglichst dünn aufzubringen, etwa in der Stärke von typisch in der Größenordnung zwischen 0,5µ und 30µ.

Zu bevorzugen ist für diese Hartlack-Schutzschicht ein Organosilikat mit alkoholischen oder Ester-Lösungsmitteln (bzw Mischungen daraus), weil das eine extrem gute Widerstandsfähigkeit der äußeren Schicht erbringt. Vorteilhaft ist dabei auch die Möglichkeit, naß in naß zu arbeiten, also die äußere Schutzschicht schon im noch nicht-ausgehärteten Zustand auf die Dekorschicht (ggf unter Zwischenlage einer Haftschicht) aufbringen zu können, so daß eine Anzahl von Fertigungsschritten für ein Aushärten der Zwischenschicht vor dem Aufbringen der Hartlackschicht entfällt.

Diese zum Schutz aushärtbare chemische Substanz auf der Basis von Silizium, Kohlenstoffverbindungen und Metallen wie Titan ist ihrerseits vor dem Aufbringen mit Pigmenten und mit klarlöslichen Farbstoffen einfärbbar, um für sich allein oder in der Kombination mit der darunterliegenden Dekorschicht etwa durch einen bläulichen Schimmer oder durch metallisierende Effekte die metallische Brillianz noch zu verstärken. Außer dem Kunststoff-Armbanduhrengehäuse oder dergleichen Rohling selbst kann im Falle einer Armbanduhr auch das Uhrglas, zumal wenn es aus PMMA (Acrylglas) besteht, vorteilhaft mit dieser Hartlackschicht ausgestattet werden, um das an sich weiche Acryl-Glas hoch kratzfest zu machen und um zusätzliche an das Gehäuse angepaßte Farbeffekte über oder unter dem Zifferblatt zu erzielen. Zugleich fördert das die Verschweißbarkeit des Glasrandes mit dem entsprechend beschichteten Gehäuserand. Bei Aufbringen der glasklaren Schutzschicht auf ein bereits in das Gehäuse eingesetztes oder eingeschweißtes Glas ergibt sich vorteilhafterweise eine zusätzliche Dichtwirkung an der Grenzfläche zwischen Glas und Glasreif bzw. Gehäuse.

Andere im Rahmen vorliegender Erfindung vorteilhaft einsetzbare Hartlacke, die allerdings weniger hart als die Organosilikate sind, sind Isocyanat-Acryllacke und Zweikomponenten-Polyadditionslacke, bei denen die Harzkomponente - also etwa Alkyd, Acrylat oder dergleichen, aber auch allgemein Polyester und vorzugsweise Polyester/Isocyanat-Formulierungen - mit einem isocyanathaltigen Härter ausreagiert. Die vor dem Auftragen gemischten Ein- oder Zweikomponenten-Systeme, ibs. die aus Acryl-modifizierten Isocyanatlacken, weisen den verfahrenstechnischen Vorteil auf, sowohl thermisch wie auch UV-aushärtbar zu sein. Zusätzlich zur Festigkeitserhöhung gegenüber dem Verhalten des Rohlings ergibt sich eine hervorragende Eignung für Ultraschall-Verschweißung, wenn mit einem thermisch oder UV-aushärtbaren Klarlack etwa ein ABS-Rohling, ein PC-Rohling oder eine Acrylglasscheibe (PMMA) beschichtet wird.

Die jeweilige äußere Hartlackschicht weist über die Vorteile hoher Abriebfestigkeit hinaus auch die Vorteile auf, allergiefest und umweltverträglich zu sein. Gegenüber dem üblichen aber handhabungstechnisch aufwendigen und deshalb fertigungstechnisch teueren Aushärten der beschichteten Gehäuserohlinge in einem Trockenofen weisen beide Hartlacktypen auβerdem den verfahrenstechnischen Vorteil auf, sowohl thermisch wie auch in gewöhnlicher Umgebungsatmosphäre unter UV-Licht schnell aushärtbar zu sein. Dabei ist die UV-Anwendung fertigungstechnisch auch deshalb interessanter, weil sie schneller abläuft (in der Größenordnung von 10 Sekunden) und auch im übrigen energiesparend ist.

Für ganz besonders effektive Markierungs-, Design- und Schmuckeffekte kann der Gehäuse-Rohling unter dem abrasionsfesten Klarlack auch metallisch reflektierende Weißlichthologramme enthalten. Wegen ihrer geringen Größe beeinträchtigen die den Funkempfang nicht.

Vor allem aber wird durch die Applikation von modernen lösungsmittelhaltigen Lacken auf den Kunststoffrohling dessen farbdekorierte Oberfläche durch diese Lackverdedelung wesentlich besser geschützt, als bei Anwendung bisher üblicher Farblacke, die aber dennoch auch mit der eingeführten Lackierausrüstung problemlos aufbringbar und aushärtbar sind. Das Aushärten erfolgt vorwiegend thermisch, aber auch die zukunftsträchtige Lichtaushärtung vor UV-Lampen ist anwendbar, die nur noch etwa ein Zehntel der Energie benötigt, die für herkömmliches thermisches Aushärten einzusetzen war.

## Patentansprüche

1. Metallisch erscheinender Kunststoff-Artikel, insbesondere Funkarmbanduhrgehäuse, dadurch gekennzeichnet, daβ sein mechanisch fertig bearbeiteter Kunststoff-Rohling einer optischen und mechanischen Oberflächenveredelung durch Lackieren mit einem Hartlack unterzogen ist.

2. Kunststoff-Artikel nach Anspruch 1, dadurch gekennzeichnet, daß sein Rohling leichten schlagfesten Kunststoff wie insbesondere kohlefaserverstärkten Kunststoff aufweist.

3. Kunststoff-Artikel nach Anspruch 1, dadurch gekennzeichnet, daß sein Rohling ABS (Acrylnitrilbutadien-Styrol) oder PC (Polycarbonat) aufweist.

4. Kunststoff-Artikel nach Anspruch 1, dadurch gekennzeichnet, daß sein Rohling PMMA (Acrylglas) aufweist.

5. Kunststoff-Artikel nach einem der vorangehenden Ansprüche, dadurch gekennzeichnet, daß sein Rohling eine Grundierung aus z.B einem Lack auf Polyuretan-Basis (PU-Basis) aufweist.

6. Kunststoff-Artikel nach einem der vorangehenden Ansprüche, dadurch gekennzeichnet, daß sein Rohling auf einer Grundierung einen Acryl-Lack als vorzugsweise unstrukturiert metallisch-pigmentiertes einfarbiges Dekor aufweist.

7. Kunststoff-Artikel nach einem der vorangehenden Ansprüche, dadurch gekennzeichnet, daß sein Rohling auf einer Dekor-Beschichtung eine klare Hartlackschicht aufweist.

8. Kunststoff-Artikel nach einem der vorangehenden Ansprüche, dadurch gekennzeichnet, daß sein Rohling zwischen einer Dekor-Beschichtung und einer äußeren dünnen Hartlackschicht eine Haftschicht auf PU-Basis aufweist.

9. Kunststoff-Artikel nach einem der vorangehenden Ansprüche, dadurch gekennzeichnet, daß sein Rohling als Hartlack-Schutzschicht ein Organosilikat mit alkoholischen oder Ester-Lösungsmitteln (bzw. Mischungen daraus) aufweist.

10. Kunststoff-Artikel nach einem der vorangehenden Ansprüche, dadurch gekennzeichnet, daß sein Rohling eine aushärtbare Hartlack-Schutzschicht auf der Basis von Silizium, Kohlenstoffverbindungen und Metallen wie Titan aufweist.

11. Kunststoff-Artikel nach einem der vorangehenden Ansprüche, dadurch gekennzeichnet, daß sein Rohling eine aushärtbare Hartlack-Schutzschicht aufweist, die ihrerseits mit Pigmenten, ibs. mit metallischen plättchenförmigen Pigmenten, und / oder mit klarlöslichen Farbstoffen eingefärbt ist.

12. Kunststoff-Artikel nach einem der vorangehenden Ansprüche, dadurch gekennzeichnet, daß sein Rohling Ein- oder Zweikomponenten-Systeme aus Acryl-modifizierten Isocyanatlacken als aushärtbare Hartlack-Schutzschicht aufweist.

13. Kunststoff-Artikel nach einem der vorangehenden Ansprüche, dadurch gekennzeichnet, daß sein Rohling als Hartlack-Schutzschicht einen Zweikomponenten-Polyadditionslack aufweist, bei dem die Harzkomponente - also etwa Alkyd, Acrylat oder dergleichen, aber auch allgemein Polyester und vorzugsweise Polyester/Isocyanat-Formulierungen - mit einem isocyanathaltigen Härter ausreagiert.

14. Kunststoff-Artikel nach einem der vorangehenden Ansprüche, dadurch gekennzeichnet, daß sein Rohling eine unter UV-Licht aushärtbare Hartlack-Schutzschicht aufweist.

15. Kunststoff-Artikel nach einem der vorangehenden Ansprüche, dadurch gekennzeichnet, daß sein Rohling unter dem abrasionsfesten Klarlack metallisch reflektierende Weißlichthologramme aufweist.
